Europäisches Patentamt

European Patent Office

Office européen des brevets

(11) Publication number: **0 113 670**
**B1**

(12)

# EUROPEAN PATENT SPECIFICATION

(45) Date of publication of patent specification: **11.01.89**

(51) Int. Cl.⁴: **G 21 C 17/00**

(21) Application number: 84100132.4

(22) Date of filing: 09.01.84

(54) Method of detecting breakage in nuclear reactor.

(30) Priority: 10.01.83 JP 1072/83

(43) Date of publication of application:
18.07.84 Bulletin 84/29

(45) Publication of the grant of the patent:
11.01.89 Bulletin 89/02

(84) Designated Contracting States:
DE IT SE

(56) References cited:
EP-A-0 036 332
US-A-3 712 850
US-A-4 201 092

(73) Proprietor: HITACHI, LTD.
6, Kanda Surugadai 4-chome Chiyoda-ku
Tokyo (JP)

(72) Inventor: Ohga, Yukiharu
Ishiuchi Teras 7-3 4-6-12, Suwa-cho
Hitachi-shi Ibaraki-ken (JP)

(74) Representative: Patentanwälte Beetz sen. -
Beetz jun. Timpe - Siegfried - Schmitt-Fumian
Steinsdorfstrasse 10
D-8000 München 22 (DE)

Courier Press, Leamington Spa, England.

## Description

This invention relates to a method of detecting the scale of a breakage occurring in a pressure vessel in a nuclear reactor.

There is a known method of detecting a position and area (which will be hereinafter referred to as scale) of a breakage occurring in a pressure vessel in, for example, a boiling reactor by utilizing signals representative of the pressure and water level in the pressure vessel.

However, in this conventional method, it is difficult and takes much time to detect the scale of a breakage covering a small area because such a small breakage causes a water level, which represents a position of the breakage, in a pressure vessel to vary only to a small extent.

There is another known method of this kind which has developed with a view to eliminate these problems. In this method, signals representative of the pressure and temperature in, for example, a container housing a reactor pressure vessel are used.

However, in this conventional method, variations in temperature in a container due to the occurrence of a breakage are not identical in all parts of the interior thereof; the degree of variations in this temperature differs greatly in different parts of the interior of the container. This causes a decrease in the accuracy of results of detection of the scale of a breakage.

In general, the condition of the occurrence of a breakage and a rate of development of an accident due to a breakage differ greatly with the scale of the breakage. Accordingly, when the scale of a breakage is not detected at a high accuarcy, it is impossible to predict the condition of the occurrence of a breakage or show selectively in accordance with the scale of a breakage a suitable operational method for controlling an accident. Thus, there is no choice but to rely upon an operator for the selection of a suitable method of controlling an accident. Consequently, an operator is necessarily burdened with a heavy load.

It is an object of the present invention to provide a method of detecting a scale of a breakage in a nuclear reactor, which is free from the above-mentioned drawbacks encountered in a prior art method of this kind, and which is capable of detecting quickly and accurately the scale of a breakage, i.e. an area and position of a breakage even when the sizes of a breakage are small, whereby, when a breakage occurs, the grasping and predicting of the progress of the accident and the instructing of an operator to take a suitable step can be done reliably.

In order to achieve the above object, the method according to the present invention comprises the steps of measuring the pressures in a container housing a pressure vessel and in said pressure vessel determining an area of a breakage in said pressure vessel or said pipe on the basis of rates of increase in said container pressure, and determining whether a fluid existing at said breakage is in a liquid phase or a gaseous phase on the basis of correlation between said pressure in the pressure vessel and said area of breakage wherein the values showing the correlation between the pressures in said pressure vessel and said container and position and area of a breakage are values which have been determined in advance, and which show the correlation between the range of variations in an arbitrary length of time period in the pressure in said pressure vessel or said container and a position or an area of a breakage, said step of determining an area and position of a breakage consisting of substeps of determining an area of a breakage by utilizing values, which are among said values determined in advance, and which show the correlation between the range of variations in the pressure in said container and an area of a breakage, and determining a position of the same breakage by utilizing values, which are among said values determined in advance, and which show the correlation between the width of variations in the pressure in said pressure vessel and an area of said breakage.

According to the present invention an area and a position of a breakage occurring in a reactor pressure vessel or a pipe connected thereto can be detected with a high accuracy, and even a small breakage can be detected quickly and accurately by using signals, which vary greatly when a breakage occurs, and which are outputted from pressure gauges. Therefore, such a method of detecting the scale of a breakage has a highly-improved saftey and great economical advantages.

The pressure in a container housing a pressure vessel varies depending largely upon an area of a breakage and depending little upon a position thereof. Values representative of the correlation between variations in the pressure in a container and those in an area of a breakage are determined in advance by utilizing the above-mentioned characteristics and on the basis of the results of experiments conducted by using a simulator or an actual nuclear reactor. Also, values representative of the correlation between variations in the pressure in a reactor pressure vessel and those in a position of a breakage are determined in advance by utilizing the characteristics that the pressure in a pressure vessel varies depending largely upon the position of a breakage, and on the basis of the results of experiments conducted by using a simulator as actual nuclear reactor. When a breakage occurs, actual pressures in a container and a pressure vessel inputted into a detector used according to the present invention, to determine an area and a position of the breakage by utilizing the above-mentioned values determined in advance on the basis of results of experiments conducted by using a simulator or an actual nuclear reactor.

In the description which follows embodiments of the invention will be described, reference being made to the accompanying drawings in which,

Fig. 1 is a schematic diagram illustrating the arrangement of parts of a boiling reactor;

Fig. 2 is a graph showing variations with the lapse of time in the pressure and water level in a pressure vessel and pressure in a dry well with respect to the occurrence of a breakage;

Fig. 3 is a diagram showing variations in the pressure in a dry well with respect to the occurrence of various scales of breakages;

Fig. 4 is a diagram showing the correlations between the range of variations in increase in the pressure in a dry well and an area of a breakage with respect to a certain period of time after the occurrence of scram;

Fig. 5 is a diagram showing variations in the pressure in a pressure vessel with respect to the occurrence of various scales of breakages;

Fig. 6 is a diagram showing the correlation between the range of variations in the pressure in a pressure vessel and areas of breakages in vapor phase and liquid phase portions in a certain period of time after the closing of a main vapor isolator valve,

Fig. 7 is a block diagram showing the construction of an apparatus used to practice the present invention;

Fig. 8 is a block diagram showing the construction of a system, to which the apparatus shown in Fig. 7 is applied, for supporting an operation of a boiling reactor when an accident occurs therein;

Fig. 9 is a diagram showing the correlation between the range of increase in the pressure in dry well and an area of a breakage with respect to various periods of time, which are used as parameters, after the occurrence of scram;

Fig. 10 is a diagram showing the correlation between the range of variations in the pressure in a pressure vessel and areas of breakage in vapor phase and liquid phase portions with respect to various periods of time, which are used as parameters, after the closing of a main vapor isolator valve;

Fig. 11 is a diagram showing an operation with the lapse of time of the apparatus used to practice the present invention;

Fig. 12 is a diagram showing the correlation between the range of increase in the pressure in a dry well and areas of breakages in vapor phase and liquid phase portions with respect to a certain period of time after the occurrence of scram;

Fig. 13 is a flow chart showing the procedure of carrying out a process in the apparatus used in the embodiments of the present invention;

Fig. 14 is a diagram showing variations in the pressure in a pressure vessel with respect to the occurrence of a breakage;

Fig. 15 is a diagram showing the correlation between the time after the closing of a main vapor isolator valve and the range of variations in the pressure in a pressure vessel during a certain period of time with respect to the case where the liquid phase discharge continues and the case where the liquid phase discharge changes into the vapor phase discharge;

Fig. 16 is a block diagram showing the construction of an apparatus used to carry out the method according to the present invention;

Fig. 17 shows an operation with the lapse of time of the apparatus used to practice the present invention; and

Fig. 18 schematically shows the arrangement of parts of a pressurized reactor.

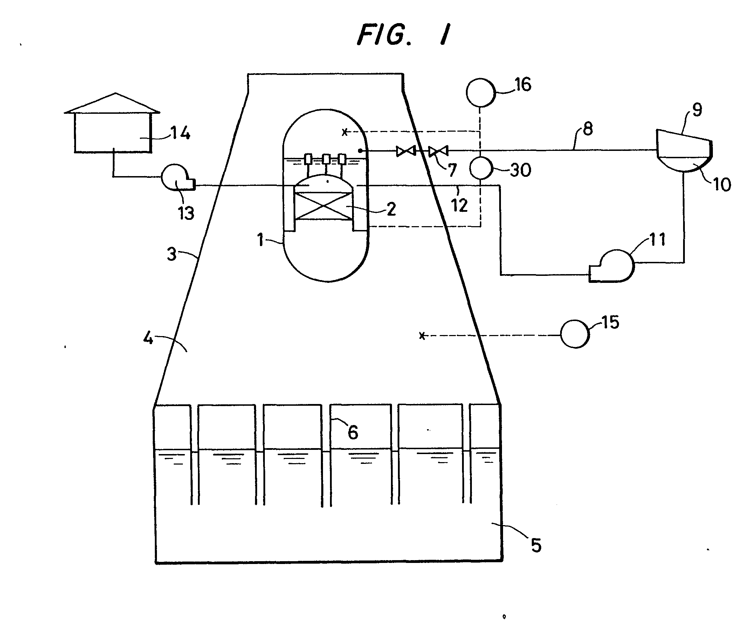

Fig. 1 is a schematic diagram showing the arrangement of parts of a boiling water reactor. Referring to Fig. 1, reference numeral 1 denotes a reactor pressure vessel (which will be hereinafter referred to as a pressure vessel), 2 a reactor core, 3 a primary reactor container (which will be hereinafter referred to as a container), 4 a dry well, 5 a suppression pool, and 6 vent pipes. The vapor generated in the reactor core 2 during a normal operation of a nuclear reactor flows through a main vapor pipe 8, which is provided with a main vapor isolator valve 7, to be introduced into a turbine 9 and to rotate the same. The resultant vapor is condensed in a condenser 10, and the condensate thus obtained is returned by a feed pump 11 to the nuclear reactor via a feed pipe 12. When the pressure vessel 1 or a pipe connected thereto is broken within the container 3, the cooling water having a high temperature and high pressure spouts into the interior of the container 3 to cause the pressure in the dry well to increase. On the other hand, the pressure and water level in the pressure vessel decrease. When the water level in the pressure vessel 1 decreases, a plant interlock is operated to cause the main vapor isolator valve 7 to be closed. A pump 13 in an emergency core cooling system is then started, so that the cooling water stored in a condensate storage tank 14 is injected into the pressure vessel 1. According to the present invention, signals from pressure gauges 15, 16 and a water gauge 30 provided in the dry well 4 and pressure vessel 1 are utilized to detect the scale of a breakage.

The phenomena occurring in a nuclear reactor when a breakage occurs therein will now be briefly described.

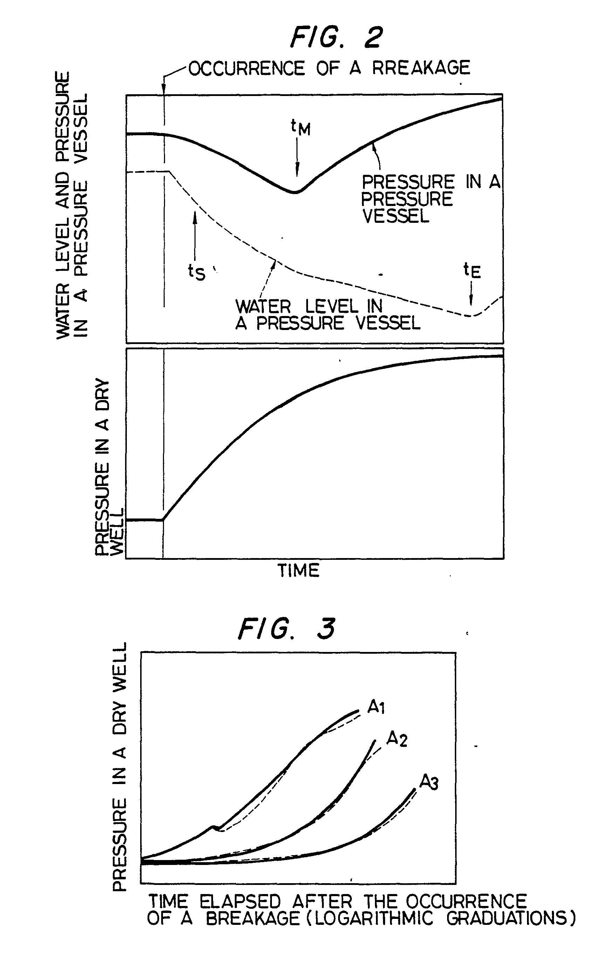

Fig. 2 shows examples of variations, which are determined by using a simulator, with the lapse of time in the pressure in the pressure vessel 1, water level (level of a liquid phase portion) in the pressure vessel, and pressure in the dry well at such time that a breakage occurs in the portion of a pipe connected to the pressure vessel 1 which are within the container 3. When a breakage occurs, the pressure and water level in the pressure vessel start decreasing. When the water level in the pressure vessel decreases, the plant interlock is operated, and scram occurs at an instant $t_s$ to cause the nuclear reactor to be stopped. The main vapor isolator valve is then closed at an instant $t_M$, so that the pressure in the nuclear reactor increases. The injection of water from the emergency core cooling system starts at an instant $t_E$ to cause the water level to increase. In the meantime, the pressure in the dry well increases after a breakage occurs. A program for analyzing phenomena taking place after the occurrence of a breakage, which program is used generally for evaluating the safety of nuclear reactors, is also used in the simulation referred to above.

The basic relation between the pressures in the dry well and pressure vessel and the scale of a breakage, which relation is utilized in the method of detecting the scale of a breakage according to the present invention, will now be described.

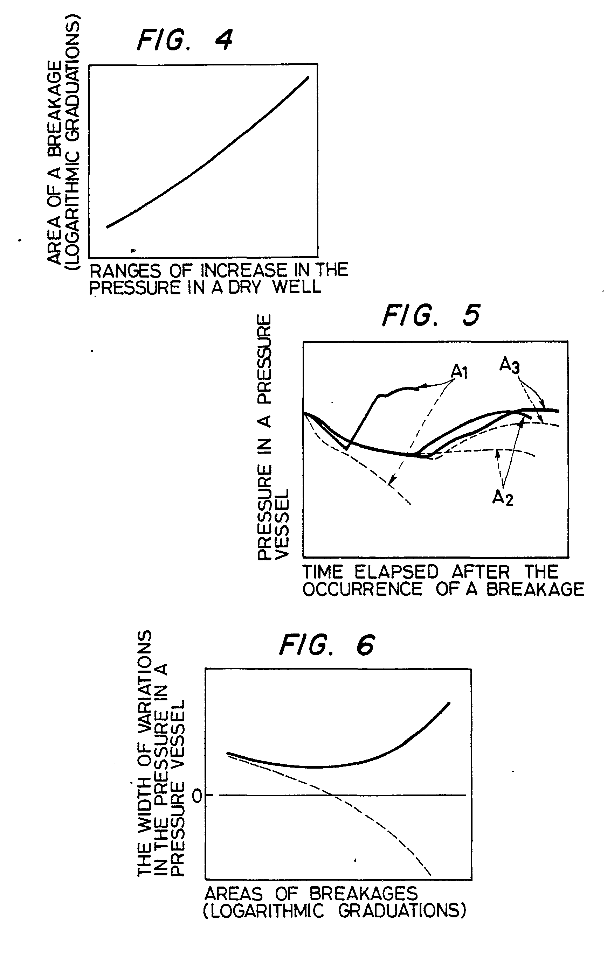

Fig. 3 shows variations with the lapse of time in the pressure in the dry well, which are determined by using a simulator, with respect to six breakages having different areas ($A_1$, $A_2$ and $A_3$) or positions (three breakages occurring in a vapor phase and having different areas or positions, and three breakages occurring in a liquid phase and having different areas or positions). In this diagram, solid lines designate liquid phase breakage, and dotted lines vapor phase breakage, the axes of abscissas and ordinates are taken in the directions of time (logarithmic graduations) elapsed after the occurrence of a breakage and the pressure in the dry well, respectively. This diagram indicates that the pressure in the dry well varies depending largely upon an area of a breakage but little upon a position thereof. Values determined in advance by utilizing these characteristics and representative of the correlation between variations in a suitable length of time period in the pressure in the dry well and those in an area of a breakage are recorded in order. For example, the correlation between the range of increase in the pressure in the dry well, which is recorded during a time period $\Delta t_A$ starting at an instant $t_s$ of the occurrence of scram, and an area of a breakage can be expressed graphically as shown in Fig. 4. In Fig. 4, the axes of abscissa and ordinate are laid in the directions of the range of increase in the pressure in the dry well and an area (logarithmic graduations) of a breakage, respectively. When a breakage occurs, a signal representative of the pressure in the dry well is inputted into a detector to determine the range of variations of the pressure in the dry well during the time period $\Delta t_A$, which starts at the instant $t_s$ of the occurrence of scram, by utilizing the graph shown in Fig. 4. Thus, an area of a breakage can be determined.

Fig. 5 shows variations with the lapse of time in the pressure in the pressure vessel, which are determined by using a simulator, with respect to six breakages having different areas ($A_1$, $A_2$ and $A_3$) and positions. In this diagram, the axes of abscissa and ordinate are laid in the directions of time elapsed after the occurrence of a breakage and the pressure in the pressure vessel, respectively. It is understood from the drawings that the degrees of variations in the pressure in the pressure vessel differ greatly depending upon the positions, i.e. a vapor phase portion (dotted lines) and a liquid phase portion (solid lines), in which a breakage occurs. Values representing the correlation between variations in the pressure in the pressure vessel in a predetermined suitable length of time and those in an area of a breakage occurring in a vapor phase portion and an area of a breakage occurring in a liquid phase portion are determined in advance by utilizing these characteristics. For example, values representing the correlation between the range of variations in the pressure in the pressure vessel occurring during the time $\Delta t_B$, which starts at an instant $t_M$, at which the main vapor isolator valve is closed, and those in an area of a breakage occurring in a vapor phase portion (a dotted line) and an area of a breakage occurring in a liquid phase portion (a solid line) can be expressed graphically as shown in Fig. 6. In Fig. 6, the axes of abscissa and ordinate are laid in the direction of an area of a breakage and the width of variations in the pressure in the pressure vessel, respectively. It is understood from the drawings that the correlation between the pressure in the pressure vessel and an area of a breakage in a vapor phase portion and the correlation between the pressure in the pressure vessel and an area of a breakage in a liquid phase portion are greatly different. Accordingly, when a signal representative of actual pressure in the pressure vassel is inputted into a detector so as to be processed on the basis of the correlation, which is shown in Fig. 6, between an area of a breakage and the pressure in the pressure vessel, and by utilizing the values of areas of breakages, which values have been determined on the basis of the correlation, which is shown in Fig. 4, between the pressure in the dry well and an area of a breakage, a position of a breakage can be determined, i.e. it can be ascertained that a breakage detected is in a vapor phase portion or a liquid phase portion.

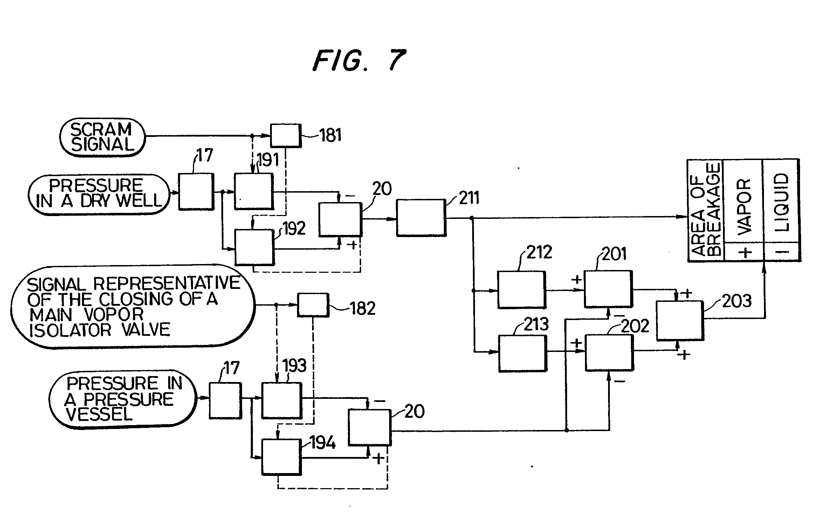

Fig. 7 schematically shows the construction of an apparatus used to detect the scale of a breakage on the basis of the correlation mentioned above between the pressures in the pressure vessel and dry well and the area and position of a breakage. Reference numeral 17 denotes an A/D converter adapted to convert an analog signal into a digital signal, 181, 182 delay circuits, 191, 192, 193, 194 hold circuits adapted to store an input signal when a trigger signal is inputted thereinto, 20, 201, 202, 203 adders, and 211, 212, 213 function generators. Signals representative of the pressures in the dry well and pressure vessel and outputted from the pressure gauges 15, 16 shown in Fig. 1 are inputted constantly into this apparatus to be introduced into the hold circuits 191—194. When a breakage occurs to cause scram to take place in a nuclear reactor, a scram signal is generated, and a trigger signal is applied to the hold circuit 191. Consequently, a value (digital value) of the pressure in a dry well at an instant $t_s$, at which the scram occurred, is held in the hold circuit 191. The scram signal is also introduced into the delay circuit 181 at the same time, and a trigger signal is applied to another hold circuit 192 after a period of time $\Delta t_A$ has elapsed. As a result, a value of the pressure in the dry well, which is recorded at such time that is a period of time $\Delta t_A$ later than the time of occurrence of scram, is held in the hold circuit 192. When the value is held in the hold circuit 192, this value and a value in the hold circuit 191 are supplied to the adder 20, and a signal representative of a width of increase in the pressure in the dry well, which is recorded after the instant $t_s$, at which a scram signal was inputted into the hold circuit 191 and delay circuit 181, and during the time $\Delta t_A$, is outputted therefrom. This output signal is applied to the function generator 211 to determine therein an area $A_{BRK}$ of a breakage on the basis of the correlation values graphically shown in Fig. 4. On the other hand, when a main vapor isolator valve is closed at an instant $t_M$ due to a decrease in the water level, a trigger signal is inputted into the hold circuit 193 due to a signal representative of the closing of this valve, so that a value representative of the pressure in the pressure vessel at the instant $t_M$ is held in the hold circuit 193. The signal representative of the closing of the main vapor isolator valve is applied to the delay circuit 182, and a trigger signal is inputted into the hold circuit after a period of time $\Delta t_B$ has elapsed. As a result, a value of the pressure in the pressure vessel, which is recorded when the time $\Delta t_B$ has elapsed after the closing of the main vapor isolator valve, is held in the hold circuit 194. When this value is held in the hold circuit 194, the same value and a value in the hold circuit 193 are applied to the adder 20 to output therefrom a signal representative of a width $\Delta P_{RPV}$ of variations in the pressure in the pressure vessel, which is recorded after the signal representative of the closing of the main vapor isolator valve was inputted and during the time $\Delta t_B$.

A value of the area $A_{BRK}$, which was determined in the function generator 211, of a breakage is applied to the function generators 212, 213. In these function generators 212, 213, the correlation values regarding a breakage in vapor phase and liquid phase portions, which are graphically shown in Fig. 6, are utilized to determine a range $\Delta P_{RPV}^g$ of variations in the pressure in a nuclear reactor on the assumption that a breakage is in a vapor phase portion, and a range $\Delta P_{RPV}^f$ of variations in the pressure in the pressure vessel on the assumption that a breakage is in a liquid phase portion. The values thus determined are applied to the adders 201, 202, respectively, to determine differences between these values and the value $\Delta P_{RPV}$ of variations in the actual pressure in the pressure vessel, which were determined on the basis of such actual values. The values of these differences are applied to the adder 203. When the differences have positive values, the breakage is determined as a breakage in a vapor phase, and, when the differences have negative values, the breakage is determined as a breakage in a liquid phase.

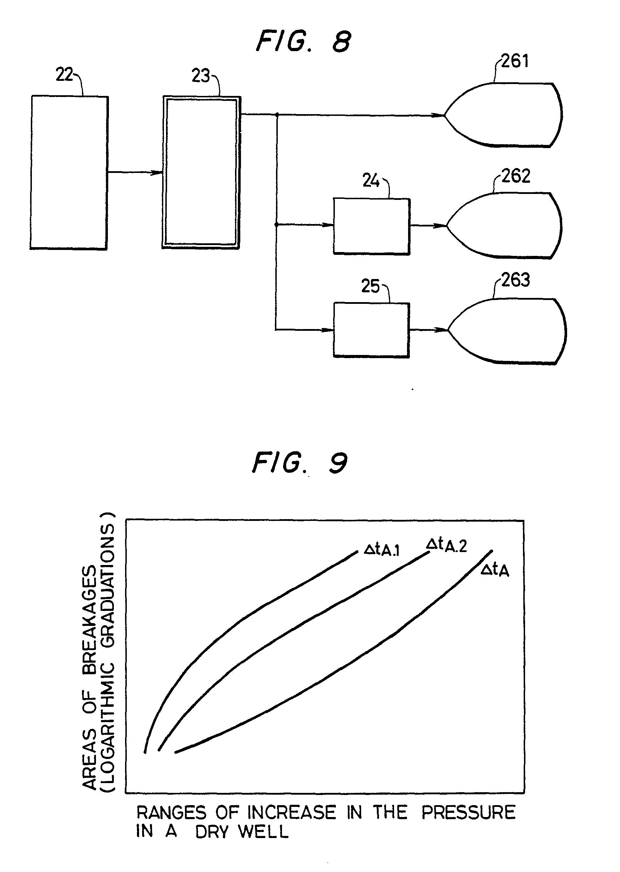

Fig. 8 shows the system configuration of the apparatus, which is used to practice the present invention, and which is applied to an emergency operation support system for a boiling reactor. Reference numeral 22 denotes a boiling reactor, 23 a breakage-scale detector used for practicing the present invention, 24 an operation guide, 25 a condition predictor, and 261, 262, 263 indicators. The information on the scale of a breakage, which is determined by the breakage-scale detector 23, is given directly to an operator through the indicator 261. The operator, who is thus informed about the sizes of a breakage and the degree of urgency, can deal with the accident. He can also take an emergency measure by, for example, closing a valve provided in a pipe, in which a breakage occurred. In addition, the discovering of the position of a breakage and the repairing thereof can be done easily after the accident has been controlled. The information on the scale of a breakage in sent to the operation guide 24 at the same time, and operational guidance suitable for the scale of a breakage is selected therein to be shown to an operator through the indicator 262. The operator can take a suitable step in accordance with the guidance. The information on the scale of a breakage is further sent to the condition predictor 25. The condition predictor 25 is adapted to predict the condition of progress of an accident and display the same on the indicator 263. An operator, who observes the indicator 263, can obtain the knowledge as to how the accident will progress and the knowledge of the length of time left before he should take the guided step.

In this apparatus, which is used to practice the method according to the present invention, the scale of a breakage is estimated by utilizing the correlation values graphically shown in Figs. 4 and 6, to determine the range of an increase in the pressure, which is measured after the occurrence of scram and during the time $\Delta t_A$, in the dry well, and the range of variations in the pressure, which is measured after the closing of the main vapor isolator valve and during the time $\Delta t_B$, in the pressure vessel. Both of these ranges are calculated on the basis of actual values. In this apparatus, the calculations referred to above of the range of an increase in the pressure in the dry well and the range of an increase in the pressure in the pressure vessel are made only once each. Accordingly, there is the possibility that the reliability of the scale determined of a breakage decreases due to the fluctuation of a signal representative of an actual value and extracted from a plant and the influence of noise. Another embodiment will now be described, in which the number of extraction of signals and the frequency of making calculations are increased so as to improve the reliability of the scale determined of a breakage.

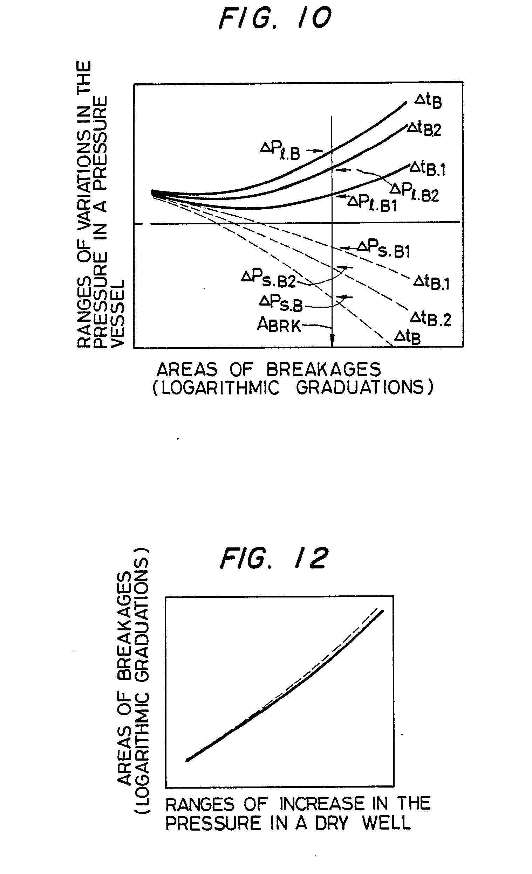

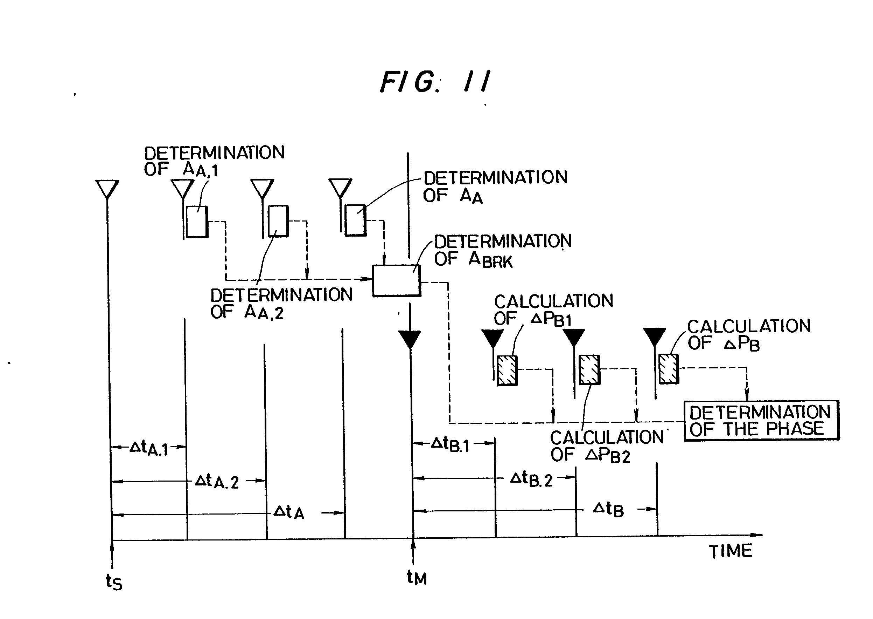

Figs. 9 and 10 are graphs of values used in a second embodiment and representing the correlation between the pressures in a dry well and a pressure vessel and a area of a breakage. Fig. 9 shows values representing the same correlation as shown in Fig. 4, and determined at not only an instant, which is a period of time $\Delta t_A$ later than the receipt of a scram signal, but also instants, which are periods of time $\Delta t_{A,1}$, $\Delta t_{A,2}$ later than the receipt of a scram signal. Referring to Fig. 9, $\Delta t_{A,1} < \Delta t_{A,2} < \Delta t_A$. On the other hand, Fig. 10 shows values representing the same correlation as shown in Fig. 6, and determined at not only an instant, which is a period of time $\Delta t_B$ later than the closing of a main vapor isolator valve, but also instants, which are periods of time $\Delta t_{B,1}$, $\Delta t_{B,2}$ later than the closing of the main vapor isolator valve. Referring to Fig. 10, $\Delta t_{B,1} < \Delta t_{B,2} < \Delta t_B$.

In the apparatus used in this embodiment, signals representative of the pressure in a dry well and generated at an instant, at which a scram signal is inputted into the apparatus, and instants, which are periods of time $\Delta t_{A,1}$, $\Delta t_{A,2}$, $\Delta t_A$ later than the receipt of the scram signal, are extracted to calculate the ranges of increase in the pressure in the dry well during the periods of time $\Delta t_{A,1}$, $\Delta t_{A,2}$, $\Delta t_A$ on the basis of the values of these signals. These calculated values are used to determine the values $A_{A,1}$, $A_{A,2}$, $A_A$ of areas of a breakage on the basis of the correlation values graphically shown in Fig. 9. After these three values have been determined, they are averaged to obtain a value of an area $A_{BRK}$ of a breakage. Namely, $A_{BRK}=(A_{A,1}+A_{A,2}+A_A)/3$.

After the area $A_{BRK}$ has been determined, ranges $\Delta P_{I,B1}$, $\Delta P_{I,B2}$, $\Delta P_{I,B}$ (for the case where a breakage is assumed to be a breakage in a liquid phase portion) and $\Delta P_{S,B1}$, $\Delta P_{S,B2}$, $\Delta P_{S,B}$ (for the case where a breakage is assumed to be a breakage in a vapor phase portion) of variations in the pressure in a pressure vessel, which variations occur after the closing of a main vapor isolator valve and during the periods of time $\Delta t_{B,1}$, $\Delta t_{B,2}$, $\Delta t_B$, are determined as shown in Fig. 10, on the basis of the correlation values graphically shown in Fig. 10.

In the meantime, signals representative of the pressures in the pressure vessel which pressures are measured at an instant, at which a signal representative of the closing of the main vapor isolator valve is inputted inho the apparatus, and instants, which are periods of time $\Delta t_{B,1}$, $\Delta t_{B,2}$, $\Delta t_B$ later than the instant of receipt of the same signal, are extracted to calculate ranges $\Delta P_{B1}$, $\Delta P_{B2}$, $\Delta P_B$ of variations of the pressure in the pressure vessel during the periods of time $\Delta t_{B,1}$, $\Delta t_{B,2}$, $\Delta t_B$ on the basis of the values of the pressure signals. The values of variations in the pressure in the pressure vessel are utilized to determine in the following manner whether the breakage is a breakage in a vapor phase portion or a breakage in a liquid phase portion.

$$(\Delta P_{I,B1}-\Delta P_{B1})\times\frac{\Delta P_{I,B}-\Delta P_{S,B}}{\Delta P_{I,B1}-\Delta P_{S,B1}}+(\Delta P_{I,B2}-\Delta P_{B2})\times\frac{\Delta P_{I,B}-\Delta P_{S,B}}{\Delta P_{I,B2}-\Delta P_{S,B2}}+(\Delta P_{I,B}-\Delta P_B)$$

$$+(\Delta P_{S,B1}-\Delta P_{B1})\times\frac{\Delta P_{I,B}-\Delta P_{S,B}}{\Delta P_{I,B1}-\Delta P_{S,B1}}+(\Delta P_{S,B2}-\Delta P_{B2})\times\frac{\Delta P_{I,B}-\Delta P_{S,B}}{\Delta P_{I,B2}-\Delta P_{S,B2}}+(\Delta P_{S,B}-\Delta P_B)$$

is calculated. When a value obtained is positive, the breakage is determined as a breakage in a vapor phase portion, and, when a value obtained is negative, the breakage is determined as a breakage in a liquid phase portion.

Fig. 11 shows the operations of the apparatus, which is used in this embodiment, with the lapse of time. Values of signals representative of the pressures in the dry well are inputted into the apparatus at an instant (white triangle) at which a scram signal is inputted thereinto, and at instants which are periods of time $\Delta t_{A,1}$, $\Delta t_{A,2}$, $\Delta t_A$ later than the receipt of the scram signal, to determine $A_{A,1}$, $A_{A,2}$, $A_A$. After $A_{A,1}$, $A_{A,2}$, $A_A$ have been determined, an area $A_{BRK}$ of a breakage is determined in the above-mentioned manner. On the other hand, values of signals representative of the pressures in the pressure vessel are inputted into the apparatus at an instant (black triangle), at which a signal representative of the closing of the main vapor isolator valve is inputted thereinto, and instants, which are periods of time $\Delta t_{B,1}$, $\Delta t_{B,2}$, $\Delta t_B$ later than the receipt of the signal of the closing of the mentioned valve, to calculate $\Delta P_{B1}$, $\Delta P_{B2}$, $\Delta P_B$. After the calculations have been completed, the determination of the breakage as to whether it is in a vapor phase portion or a liquid phase portion is done. The value $A_{BRK}$ of area of the breakage is required to determine a phase portion, in which the breakage occurs. Therefore, when the determination of the area $A_{BRK}$ of a breakage is not done before the completion of the calculation of $\Delta P_B$, the determination of a phase portion, in which the breakage occurs, is done after an area $A_{BRK}$ thereof has been determined.

Still another embodiment will now be described. In this embodiment, the result of determination of a phase portion, in which the breakage occurs, on the basis of the correlation values graphically shown in Fig. 6 is utilized to correct the result of determination of an area of the breakage in view of the fact that the correlation between an area of a breakage and the range of increase in the pressure in the dry well during a certain length of time in the case where the breakage is in a vapor phase and such correlation in the case where the breakage is in a liquid phase differ slightly in some cases. Fig. 12 shows the correlation between the range of increase in the pressure in the dry well during the time, which starts at an instant $t_s$ of occurrence of scram and ending at an instant $\Delta t_c$, and an area of a breakage in a liquid phase portion and an area of a breakage in a vapor phase portion. It is understood from Fig. 9 that the correlation between an area of a breakage in a liquid phase portion and the range of increase in the pressure in the dry well and the correlation between an area of a breakage in a vapor phase portion and the range of increase in the mentioned pressure differ slightly. In this embodiment, the correlation values graphically shown in Fig. 12 are utilized.

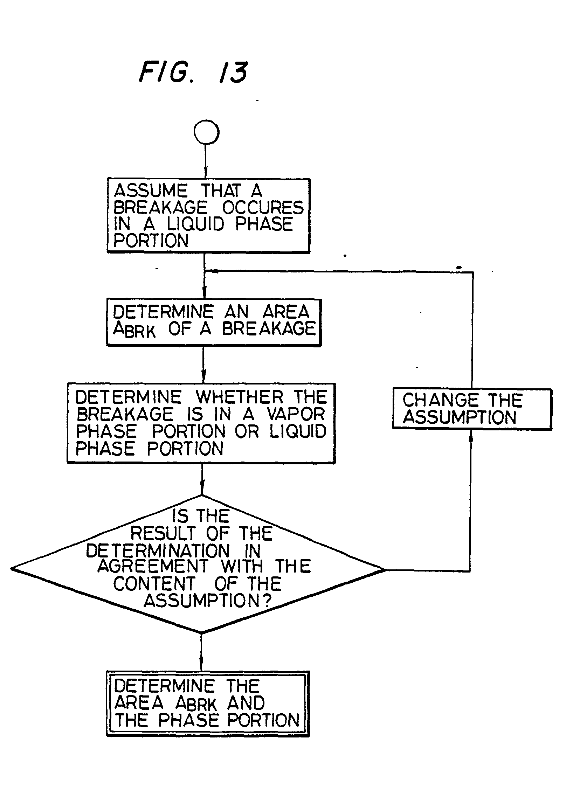

Fig. 13 is a flow chart of a process for the correction mentioned above of an area of a breakage in an apparatus used in this embodiment. In this apparatus, an area $A_{BRK}$ of a breakage is determined first on the assumption that a breakage is in a liquid phase portion and utilizing the correlation values shown in Fig. 12 and actual values of the pressure in the dry well. The breakage is then determined as to whether it is in a vapor phase portion or liquid phase portion by utilizing the correlation values graphically shown in Fig. 6, actual values of the pressure in the pressure vessel and the area $A_{BRK}$ determined previously. When the result of the determination is in agreement with the assumption, the ara $A_{BRK}$ determined of the breakage

EP 0 113 670 B1

and the phase portion determined, in which the breakage exists, are adopted as final results. On the other hand, when the assumption and the result of determination mentioned above differ from each other, the assumption regarding a phase portion, in which a breakage occurs, is changed to carry out again a process for determining an area of the breakage. The construction of the apparatus used in this embodiment is identical with that of the apparatus shown in Fig. 7 and used in the previously-described embodiment, except the section shown in Fig. 13 for correcting an area of a breakage.

A further embodiment will now be described. In this embodiment, the characteristic that, when the water level in the pressure vessel decreases due to the occurrence of a breakage to a level, which is lower than the position of the breakage, the phase of the cooling water flowing out from the breakage is changed from the liquid phase to the vapor phase. When a breakage is determined as a breakage in a liquid phase portion in an initial stage of a detecting operation, the determination of a phase portion, in which the breakage exists, is done thereafter repeatedly. When the determination of a phase portion, in which a breakage exists, changes from a liquid phase portion to a vapor phase portion, an actual value of the water level in the pressure vessel is inputted into the apparatus to determine the height of the breakage. The embodidment will be described with reference to the drawings.

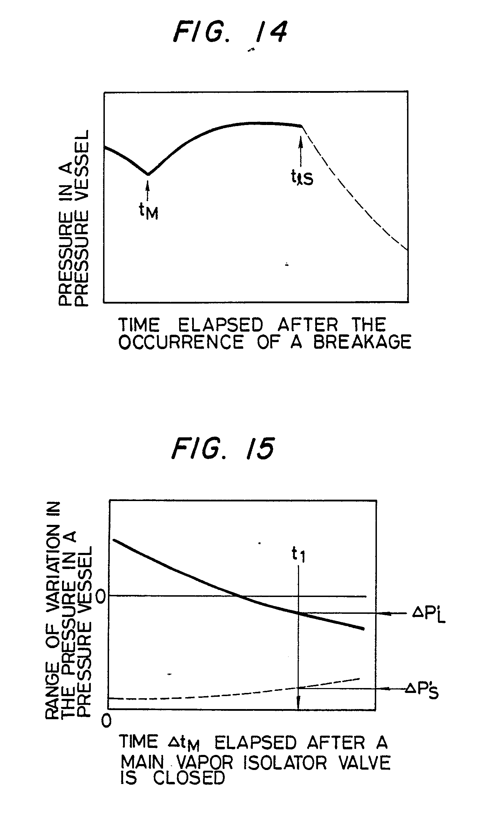

Fig. 14 shows variations, which occur after a breakage having a breakage area Ac took place in a liquid phase portion, and which are determined by using a simulator, in the pressure in the pressure vessel. The axes of abscissa and ordinate are laid in the directions of the time elapsing after the occurrence of a breakage and the pressure in the pressure vessel. Fig. 14 shows an instant $t_M$, at which the main vapor isolator is closed, and an instant $t_{ls}$, at which a position, in which the cooling water flowing out from a breakage, changes from a liquid phase portion (a solid line) to a vapor phase portion (a dotted line). When a breakage occurs in a liquid phase, a liquid flows out therefrom in an initial stage of development of the break, and, when the water level decreases to a position lower than the breakage, vapor starts being discharged therefrom. When vapor starts being discharged, a rate of decrease in pressure varies suddenly. In this embodiment, a transition instant $t_{ls}$, at which the liquid phase discharge changes into vapor phase discharge, is varied to record variations in the pressure in the pressure vessel in advance. When a breakage occurs, the height thereof is determined on the basis of correlation values thus recorded.

Fig. 15 shows values, which are determined by using a simulator, and which represent the correlation in the case where a breakage has an area $A_0$ between the length of time $\Delta t_M$ elapsing after a main vapor isolator valve is closed and the range of variations in the pressure in a pressure vessel during a predetermined length of time $\Delta t_D$ with respect to the case (solid line) where the liquid phase discharge continues and the case (dotted line) where the liquid phase discharge changes into vapor phase discharge after $\Delta t_M$ has elapsed. As shown in the drawing, the range of variations of the pressure in the pressure vessel during, for example, a period of time $\Delta t_D$, which starts at an instant $t_1$, becomes $P_L'$ when the liquid discharge continues, and $\Delta P_s'$ when the liquid discharge changes into vapor phase discharge at the instant $t_1$. Some sets of values representing such correlation and determined by using an area of a breakage as a parameter are prepared.

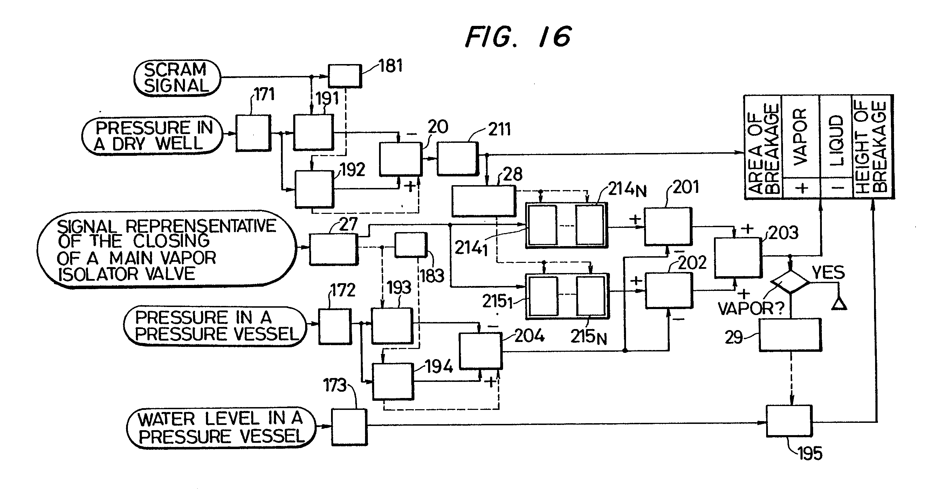

Fig. 16 schematically shows the construction of an apparatus used to detect the scale of a breakage on the basis of the correlation values graphically shown in Figs. 4 and 15. Reference numerals 171, 172, 173 denote A/D converters, 181, 183 delay circuits, 191, 192, 193, 194, 195 hold circuits, 20, 201, 202, 203, 204 adders, 211, 2141—214N, 2151—215N function generators, 27 a clock pulse generator adapted to generate pulses periodically, 28 a function generator selecting circuit adapted to select in accordance with an input signal one of function generators 2141—214N or one of the function generators 2151—215N, and 29 a symbol variation determining circuit adapted to determine the occurrence and non-occurrence of variations in a symbol. An area $A_{BRK}$ of a breakage is determined in the function generator 211 in the same manner as in the apparatus shown in Fig. 7, by using a scram signal, an actual value of the pressure in the dry well and correlation values graphically shown in Fig. 4. The value $A_{BRK}$ of a breakage is applied to the function generator selecting circuit 28, in which function generators 214i, 215i, which are in accordance with the area $A_{BRK}$ of the breakage, are selected from the function generators 2141—214N and 2151—215N, respectively. In these function generators 214i, 215i, the range of variations in the pressure in the pressure vessel during the time $\Delta t_D$ with respect to a breakage having an area $A_{BRK}$ and the cases shown in Fig. 14, in one of which the liquid phase discharge continues, and in the other of which the liquid phase discharge changes into vapor phase discharge, is determined as a function of time after a main vapor isolator valve has be closed. When a signal representative of the closing of the main vapor isolator valve enters the clock pulse generator 27, it is started to generate pulses periodically. These pulses and pulses generated by the delay circuit 183 after the time $\Delta t_D$ has elapsed cause the hold circuits 193, 194 to hold such a value of the pressure in the pressure vassel that is recorded at an instant at which the pulses enter the same circuits. When a value is held in the hold circuit 194, this value and a value held in the hold circuit 193 are applied to the adder 204, from which a signal representative of the range of $\Delta P_{RPV,j}$ of variations in the pressure in the pressure vessel is outputted, which variations are recorded after an instant $t_{P,j}$ (based on an instant, at which the main vapor isolator valve is closed), at which a pulse is inputted from the clock pulse generator thereinto, and during $\Delta t_D$. A value recorded at the instant $t_{P,j}$, at which a pulse is generated in the clock pulse generator 27, is applied simultaneously to the function generators 214i, 215i to determine the range of variations in the pressure in the pressure valve during the time $\Delta t_D$ with respect to the case where a continuous liquid phase discharge is assumed or the case where a change from liquid phase discharge to

7

vapor phase discharge is assumed. The results are applied to the adders 201, 202 to carry out the subtraction of the range $\Delta P_{RPV,j}$ of variations in actually-measured pressures, and the results are put together in the adder 203. When the value of an output from the adder 203 in a first processing operation, i.e. a processing operation carried out by a trigger signal consisting of a signal representative of the closing of the main vapor isolator valve is positive, the breakage is determined as a breakage in a vapor phase portion to complete the whole of the process shown in Fig. 16. On the other hand, the value of an output from the adder 203 in the first processing operation is negative, the breakage is determined as a breakage in a liquid phase portion. In such a case, the extraction and processing of signals representative of the pressure in the pressure vessel are done repeatedly in accordance with clock pulses until symbol variations are determined in the symbol variation determining circuit 29. When a signal indicating that the negative symbol has been changed to a positive symbol is outputted from the symbol determining circuit, the value of the water level in the pressure vessel, which value is outputted to the hold circuit 195 by the A/D converter, is held in the same circuit 195. This value is outputted as a value of the height of a breakage. A measurement signal from the water gauge 30 shown in Fig. 1 is used as a signal representative of the water level in the pressure vessel.

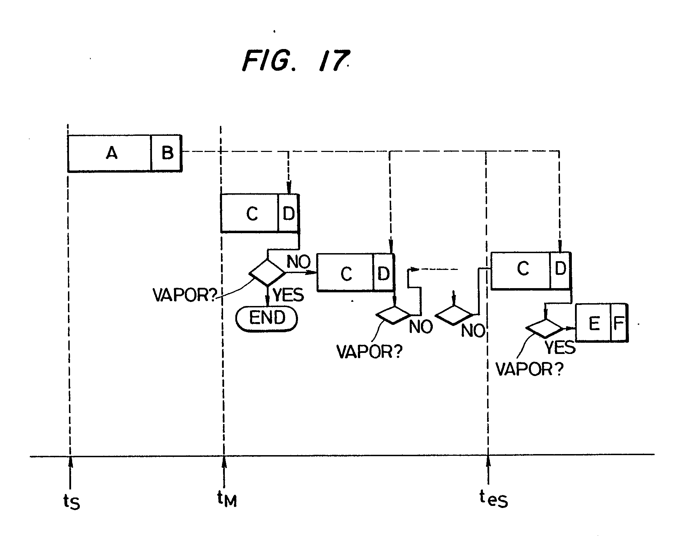

Fig. 17 shows the operational condition of the apparatus used in this embodiment described above, with the lapse of time. In this apparatus, a signal representative of the pressure in a dry well is extracted first (A) by a scram signal, which is generated when scram occurs therein, to determine an area of the breakage (B). When a signal representative of the closing of the main vapor isolator valve is inputted into the apparatus, a signal representative of the pressure in the pressure vessel is extracted (C) to determine whether the breakage is in a vapor phase portion or a liquid phase portion (D). When the breakage is determined as a breakage in a vapor phase portion, the process is completed. When the breakage is determined as a breakage in a liquid phase portion, signals representative of the pressure in the pressure vessel are extracted thereafter periodically to determine whether the liquid phase discharge continues or has changed into vapor phase discharge. When judgement that the liquid phase discharge has changed into vapor phase discharge is given, a signal representative of the water level at this instant in the pressure vessel is extracted (E) to output a value thereof as a value of the height of a position (F), in which the breakage occurred.

This embodiment is adapted to determine the height of a breakage by utilizing the correlation values graphically shown in Fig. 15, in the case where the liquid phase discharge changes into vapor phase discharge. Conversely, there is the possibility that, after a breakage occurs in a vapor phase portion, the vapor phase discharge changes into liquid phase discharge due to an increase in the water level, which is caused by the water injected from an emergency core cooling system. In such a case, the height of the breakage occurring in the vapor phase portion can also be detected in the same manner as in this embodiment by utilizing correlation values, which are similar to those shown in Fig. 15, and which have been prepared in advance with respect to the case where the vapor phase discharge continues and the case where the vapor phase discharge changes into liquid phase discharge. Correlation values similar to those shown in Fig. 15 can also be prepared with respect to amounts recorded during the time other than the time, which is later than an instant, at which a main vapor isolator valve is closed. For example, when values representing the range of variations in the pressure in a pressure vessel, which variations occur during the period of time $\Delta t_D$, are prepared as functions of the pressure in the pressure vessel, they can also be utilized on the basis of the same idea as in this embodiment to detect the height of a breakage. The degrees of variations in the pressure in the pressure vessel differ slightly depending upon the operational condition of an emergency core cooling system. Even when the above-mentioned correlation values are revised taking the operational condition of an emergency core cooling system into consideration, to be utilized in practice, the height of a breakage can also be detected in the same way as in this embodiment.

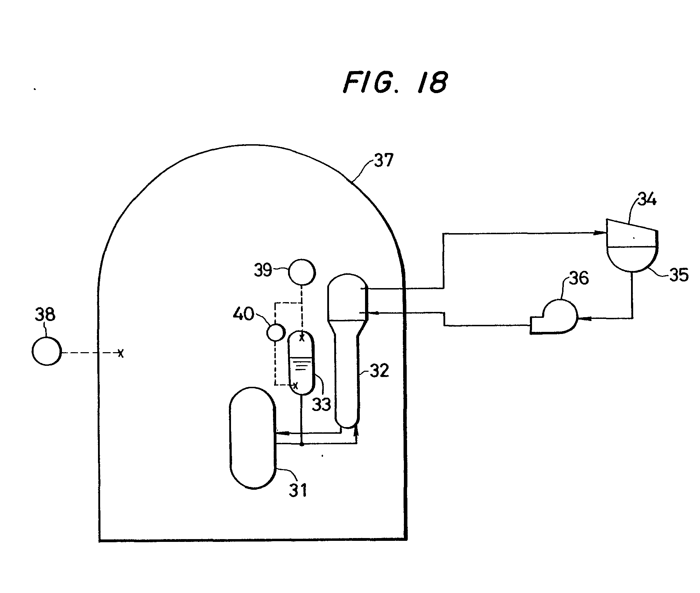

A further embodiment will now be described. In this embodiment, the present invention is applied to a pressurized reactor. Fig. 18 schematically shows the arrangement of parts of a pressurized reactor. Reference numeral 31 denotes a reactor pressure vessel, 32 a vapor generator, and 33 a pressurizer, in which liquid and vapor phase regions exist. The cooling water heated in the pressure vessel 31 is introduced into the vapor generator 32, in which the heat is transmitted to the secondary cooling water. The secondary cooling water turns into vapor due to the heat received from the primary cooling water, and the vapor is then reintroduced into the vapor generator 32 by a feed pump 36 via a turbine 34 and a condenser 35. The reactor pressure vessel 31, pressurizer 33 and vapor generator 32 are housed in a container 37. The pressure in the container is measured with a pressure gauge 38. On the other hand, the pressurizer 33 is provided therein with a pressure gauge 39 and a water gauge 40.

When the reactor pressure vessel 31, pressurizer 33, vapor generator 32, or a pipe connected to any one of them is broken within the container 37, the pressure in the container 37 and the pressure and water level in the pressurizer 33 vary in the same manner as in the above-mentioned boiling reactor. Accordingly, when signals from the pressure gauge 38 provided in the container 37, and pressure gauge 39 and water gauge 40 provided in the pressurizer 33 and adapted to measure the pressure and water level in the pressure vessel 31 are used, the scale of a breakage can be detected in the same manner as in the previously-described embodiments applied to a boiling reactor.

## EP 0 113 670 B1

**Claims**

1. A method of detecting a scale of a breakage (an area and position of a breakage) in a nuclear reactor, comprising the steps of measuring the pressures in a container housing a pressure vessel and in said pressure vessel determining an area of a breakage in said pressure vessel or in a pipe connected to said pressure vessel on the basis of rates of increase in said container pressure, and determining whether a fluid existing at said breakage is in a liquid phase or a gaseous phase on the basis of correlation between said pressure in the pressure vessel and said area of breakage wherein the values showing the correlation between the pressures in said pressure vessel and said container and position and area of a breakage are values which have been determined in advance, and which show the correlation between the range of variations in an arbitrary length of time period in the pressure in said pressure vessel or said container and a position or an area of a breakage, said step of determining an area and position of a breakage consisting of substeps of determining an area of a breakage by utilizing values, which are among said values determined in advance, and which show the correlation between the range of variations in the pressure in said container and an area of a breakage, and determining a position of the same breakage by utilizing values, which are among said values determined in advance, and which show the correlation between the width of variations in the pressure in said pressure vessel and an area of said breakage.

2. A method of detecting a scale of a breakage in a nuclear reactor according to claim 1, wherein said nuclear factor is a boiling water reactor.

3. A method of detecting a scale of a breakage in a nuclear reactor according to claim 1, wherein said nuclear reactor is a pressurized water reactor and said reactor pressure is the pressure in a pressurizer.

4. A method of detecting a scale of a breakage in a nuclear reactor according to claims 1 and 2, characterized in that said container is a drywell surrounding the pressure vessel.

**Patentansprüche**

1. Verfahren zum Feststellen des Ausmaßes eines Bruchs (einer Zone und Lage eines Bruchs) in einem Kernreaktor, das folgende Schritte umfaßt: Messen der Drücke in einem Container, in dem ein Druckbehälter untergebracht ist, sowie im Druckbehälter, Feststellen einer Bruchzone im Druckbehälter oder in einem mit dem Druckbehälter verbundenen Rohr auf der Grundlage von Anstiegsraten des Containerdrucks, und Feststellen, ob ein an dem Bruch vorhandenes Fluid sich in Flüssig- oder Gasphase befindet, und zwar auf der Grundlage der Korrelation zwischen dem Druck im Druckbehälter und der Bruchzone, wobei die Werte, die die Korrelation zwischen den Drücken im Druckbehälter und im Container sowie Lage und Zone eines Bruchs anzeigen, vorbestimmte Werte sind, die die Korrelation zwischen dem Änderungsbereich des Drucks im Druckbehälter oder im Container innerhalb einer beliebigen Zeitdauer sowie einer Lage oder Zone eines Bruchs anzeigen, wobei der Schritt des Feststellens einer Zone und Lage eines Bruchs aus folgenden Unterschritten besteht: Feststellen einer Bruchzone durch Nutzung von Werten, die zu den vorbestimmten Werten gehören und die Korrelation zwischen dem Änderungsbereich des Drucks im Container und einer Bruchzone anzeigen, und Feststellen einer Lage des gleichen Bruchs durch Nutzung von Werten, die zu den vorbestimmten Werten gehören und die Korrelation zwischen dem Änderungsbereich des Drucks im Druckbehälter und einer Bruchzone anzeigen.

2. Verfahren zum Festellen des Ausmaßes eines Bruchs in einem Kernreaktor nach Anspruch 1, wobei der Kernreaktor ein Siedewasserreaktor ist.

3. Verfahren zum Feststellen des Ausmaßes eines Bruchs in einem Kernreaktor nach Anspruch 1, wobei der Kernreaktor ein Druckwasserreaktor ist und der Reaktordruck der Druck in einem Druckhalter ist.

4. Verfahren zum Feststellen des Ausmaßes eines Bruchs in einem Kernreaktor nach Anspruch 1 und 2, dadurch gekennzeichnet, daß der Container eine den Druckbehälter umgebende Druckkammer ist.

**Revendications**

1. Procédé de détection de l'étendue d'une rupture (soit une région et une position d'une rupture) dans un réacteur nucléaire, comprenant les opérations consistant à mesurer les pressions dans un conteneur contenant une cuve sous pression et dans ladite cuve sous pression, à déterminer une région de rupture dans ladite cuve sous pression ou dans un tuyau raccordé à celle-ci sur la base des taux d'augmentation de la pression dans ledit conteneur, et à déterminer si un fluide existant au niveau de ladite rupture est dans une phase liquide ou dans une phase gazeuse sur la base de la corrélation entre ladite pression dans la cuve sous pression et ladite région de rupture, procédé dans lequel les valeurs montrant la corrélation entre les pressions dans ladite cuve sous pression et ledit conteneur et la position et la région d'une rupture sont des valeurs qui ont été déterminées à l'avance, et qui montrent la corrélation entre la plage des variations sur une durée arbitraire de temps de la pression dans ladite cuve sous pression ou dans ledit conteneur et une position ou une région de rupture, ladite opération consistant à déterminer une région et une position d'une rupture consistant en des sous-opérations consistant à déterminer une région d'une rupture en utilisant des valeurs qui font partie desdites valeurs déterminées à l'avance, et qui montrent la corrélation entre la plage des variations de la pression dans ledit conteneur et une région d'une rupture, et à déterminer une position de la même rupture en utilisant des valeurs qui figurent parmi lesdites valeurs

## EP 0 113 670 B1

déterminées à l'avance et qui montrent la corrélation entre la largeur des variations de la pression dans ladite cuve sous pression et une région de ladite rupture.

2. Procédé de détection de l'étendue d'une rupture dans un réacteur nucléaire selon la revendication 1, dans lequel ledit réacteur nucléaire est un réacteur à eau bouillante.

3. Procédé de détection de l'étendue d'une rupture dans un réacteur nucléaire selon la revendication 1, dans lequel ledit réacteur nucléaire est un réacteur à eau pressurisée et ladite pression du réacteur est la pression dans un pressuriseur.

4. Procédé de détection de l'étendu d'une rupture dans un réacteur nucléaire selon la revendication 1 ou 2, caractérisé en ce que ledit conteneur est un confinement sec entourant la cuve sous pression.

FIG. I

## FIG. 2

OCCURRENCE OF A RREAKAGE

WATER LEVEL AND PRESSURE IN A PRESSURE VESSEL

$t_M$

PRESSURE IN A PRESSURE VESSEL

$t_S$

$t_E$

WATER LEVEL IN A PRESSURE VESSEL

PRESSURE IN A DRY WELL

TIME

## FIG. 3

PRESSURE IN A DRY WELL

$A_1$

$A_2$

$A_3$

TIME ELAPSED AFTER THE OCCURRENCE OF A BREAKAGE (LOGARITHMIC GRADUATIONS)

2

FIG. 4

AREA OF A BREAKAGE
(LOGARITHMIC GRADUATIONS)

RANGES OF INCREASE IN THE
PRESSURE IN A DRY WELL

FIG. 5

PRESSURE IN A PRESSURE VESSEL

A1

A3

A2

TIME ELAPSED AFTER THE
OCCURRENCE OF A BREAKAGE

FIG. 6

THE WIDTH OF VARIATIONS
IN THE PRESSURE IN A
PRESSURE VESSEL

0

AREAS OF BREAKAGES
(LOGARITHMIC GRADUATIONS)

EP 0 113 670 B1

## FIG. 7

SCRAM SIGNAL

PRESSURE IN A DRY WELL — 17

181

191

192

20

211

SIGNAL REPRESENTATIVE OF THE CLOSING OF A MAIN VOPOR ISOLATOR VALVE — 182

PRESSURE IN A PRESSURE VESSEL — 17

193

194

20

212

213

201

202

203

| AREA OF BREAKAGE | |
|---|---|
| VAPOR | LIQUID |
| + | − |

## FIG. 8

## FIG. 9

RANGES OF INCREASE IN THE PRESSURE
IN A DRY WELL

AREAS OF BREAKAGES
(LOGARITHMIC GRADUATIONS)

## FIG. 10

RANGES OF VARIATIONS IN THE PRESSURE IN A PRESSURE VESSEL

$\Delta t_B$
$\Delta t_{B2}$
$\Delta t_{B.1}$
$\Delta P_{\ell.B}$
$\Delta P_{\ell.B2}$
$\Delta P_{\ell.B1}$
$\Delta P_{s.B1}$
$\Delta P_{s.B2}$
$\Delta P_{s.B}$
$A_{BRK}$
$\Delta t_{B.1}$
$\Delta t_{B.2}$
$\Delta t_B$

AREAS OF BREAKAGES
(LOGARITHMIC GRADUATIONS)

## FIG. 12

AREAS OF BREAKAGES
(LOGARITHMIC GRADUATIONS)

RANGES OF INCREASE IN THE
PRESSURE IN A DRY WELL

## FIG. 11

EP 0 113 670 B1

DETERMINATION
OF $A_{A,1}$

DETERMINATION
OF $A_A$

DETERMINATION
OF $A_{A,2}$

DETERMINATION
OF $A_{BRK}$

CALCULATION
OF $\triangle P_{B1}$

CALCULATION
OF $\triangle P_B$

DETERMINATION
OF THE PHASE

CALCULATION
OF $\triangle P_{B2}$

$\triangle t_{A.1}$

$\triangle t_{B.1}$

$\triangle t_{A.2}$

$\triangle t_{B.2}$

$\triangle t_A$

$\triangle t_B$

TIME

$t_S$

$t_M$

# FIG. 13

ASSUME THAT A BREAKAGE OCCURES IN A LIQUID PHASE PORTION

DETERMINE AN AREA A$_{BRK}$ OF A BREAKAGE

DETERMINE WHETHER THE BREAKAGE IS IN A VAPOR PHASE PORTION OR LIQUID PHASE PORTION

CHANGE THE ASSUMPTION

IS THE RESULT OF THE DETERMINATION IN AGREEMENT WITH THE CONTENT OF THE ASSUMPTION?

DETERMINE THE AREA A$_{BRK}$ AND THE PHASE PORTION

EP 0 113 670 B1

FIG. 14

PRESSURE IN A PRESSURE VESSEL

$t_M$   $t_{1S}$

TIME ELAPSED AFTER THE OCCURRENCE OF A BREAKAGE

FIG. 15

RANGE OF VARIATION IN THE PRESSURE IN A PRESSURE VESSEL

0

$t_1$

$\Delta P'_L$

$\Delta P'_S$

TIME $\Delta t_M$ ELAPSED AFTER A MAIN VAPOR ISOLATOR VALVE IS CLOSED

FIG. 16

FIG. 17.

FIG. 18